# EUROPÄISCHE PATENTSCHRIFT

(11) **EP 2 625 748 B1**
(45) Veröffentlichungstag und Bekanntmachung des Hinweises auf die Patenterteilung: **12.11.2014**
(21) Anmeldenummer: 11776346.6
(22) Anmeldetag: 30.09.2011
(51) Int. Cl.: H01R 9/26, H01R 43/00

(54) **VERFAHREN ZUR MONTAGE VON BAUTEILEN AUF EINER TRAGSCHIENE SOWIE SYSTEM ZUR DURCHFÜHRUNG DES VERFAHRENS**
METHOD FOR MOUNTING COMPONENTS ON A SUPPORTING RAIL, AND SYSTEM FOR CARRYING OUT THE METHOD
PROCÉDÉ DE MONTAGE DE COMPOSANTS SUR UN RAIL SUPPORT ET SYSTÈME POUR LA MISE EN OEUVRE DUDIT PROCÉDÉ

(30) Priorität: 05.10.2010 DE 102010047369
(43) Veröffentlichungstag der Anmeldung: 14.08.2013
(73) Patentinhaber: Phoenix Contact GmbH & Co. KG, 32825 Blomberg (DE)
(72) Erfinder: RUPPERT, Jens, 32825 Blomberg (DE)
(86) Internationale Anmeldenummer: PCT/EP2011/004927
(87) Internationale Veröffentlichungsnummer: WO 2012/045432

(56) Entgegenhaltungen:
- EP-A1- 1 629 706
- EP-A2- 0 158 437
- WO-A1-2010/057768
- DE-U1- 20 301 637

## Beschreibung

Die vorliegende Erfindung bezieht sich auf ein Verfahren gemäß dem Oberbegriff des Anspruchs 1 sowie ein System zu dessen Durchführung gemäß dem Oberbegriff des Anspruchs 6.

Ein derartiges Verfahren sowie ein System zu dessen Durchführung sind beispielsweise bereits aus der WO 2010/057768 A1 bekannt. Bei dem bekannten Verfahren werden die als Reihenklemmen ausgebildeten Bauteile mittels einer als 6-Achsen-Roboter ausgebildeten ersten Vorrichtung aus einem Magazin entnommen und auf eine Tragschiene aufgesteckt. Hierzu ist die Tragschiene auf einer räumlich fixierten, als Halteplatte ausgebildeten zweiten Vorrichtung in einer ersten Montageposition gehalten. Sämtliche erforderlichen Bewegungen werden durch den Roboter durchgeführt, der dafür eine als beweglichen Greifer ausgebildete Aufnahme für die Bauteile umfasst.

Der vorliegenden Erfindung liegt die Aufgabe zugrunde, ein Verfahren sowie ein System zur Durchführung des Verfahrens anzugeben, bei dem die Montage schneller erfolgt und das System platzsparender ausgebildet ist.

Diese Aufgabe wird durch ein Verfahren mit den Merkmalen des Anspruchs 1 und mit einem System gemäß Anspruch 6 gelöst. Die Unteransprüche betreffen vorteilhafte Weiterbildungen der Erfindung.

Ein wesentlicher Vorteil des erfindungsgemäßen Verfahrens liegt insbesondere darin, dass die Montage schneller erfolgt und das System platzsparender ausgebildet ist. Daneben können die Montageabläufe derart vereinfacht werden, dass die erste Vorrichtung weniger komplex ausgebildet werden kann. Anstelle einer sehr komplexen ersten Vorrichtung, beispielsweise einem 6-Achsen-Roboter, können für das erfindungsgemäße Verfahren zwei einfachere erste und zweite Vorrichtungen verwendet werden.

In einer besonders vorteilhaften Weiterbildung des erfindungsgemäßen Verfahrens positioniert die zweite Vorrichtung die Tragschiene in den Montagepositionen relativ zu der ersten Vorrichtung derart, dass die erste Vorrichtung, bei der Überführung von der Ausgangs- in die Endeposition durch eine einzige lineare Bewegung eines der Bauteile aus dem Magazin entnimmt und der Tragschiene zuführt. Auf diese Weise ist der Bewegungsablauf der ersten Vorrichtung sehr stark vereinfacht, so dass die erste Vorrichtung konstruktiv und bezüglich der elektrischen Ansteuerung sehr einfach und damit kostengünstig realisiert werden kann.

Grundsätzlich ist das Aufstecken der Bauteile durch die erste Vorrichtung auf die Tragschiene hinsichtlich des Bewegungsablaufs in weiten geeigneten Grenzen frei wählbar. Zweckmäßigerweise wird durch die einzige lineare Bewegung der ersten Vorrichtung gemäß der vorgenannten Ausführungsform in einem ersten Bewegungsabschnitt das Bauteil mit der Tragschiene in deren Randbereichen zueinander in Anlage gebracht und in einem zweiten Bewegungsabschnitt das Bauteil um das so gebildete Drehgelenk in eine Endlage relativ zu der Tragschiene gedreht. Hierdurch ist es möglich, trotz einer einfachen Bewegung der ersten Vorrichtung einen komplexeren Bewegungsablauf bei der Montage der Bauteile auf der Tragschiene zu realisieren.

Eine Weiterbildung des vorgenannten Verfahrens sieht vor, dass die einzige lineare Bewegung der ersten Vorrichtung während des zweiten Bewegungsabschnitts das Bauteil zunächst in eine Zwischenlage und zeitlich danach in die Endlage überführt. Auf diese Weise ist ein Ausgleich von Toleranzen der Bauteile und der Tragschiene ermöglicht.

Eine besonders vorteilhafte Weiterbildung der beiden letztgenannten Verfahren sieht vor, dass die erste Vorrichtung am Ende der einzigen linearen Bewegung und vor deren Rücküberführung in die Ausgangsposition für eine vorher festgelegte Wartezeit in der Endposition verbleibt und die zweite Vorrichtung während der Wartezeit die auf der Tragschiene bereits aufgesteckten Bauteile mit einer vorher festgelegten Kraft gegen die erste Vorrichtung presst. Hierdurch ist es ohne zusätzliche Vorrichtungen ermöglicht, die einzelnen auf der Tragschiene aufgesteckten Bauteile, trotz eines für die problemlose Montage erforderlichen Spiels, in enge Anlage zueinander zu überführen.

Darüber hinaus wird ein System zur Montage von Bauteilen auf einer Tragschiene gemäß einem der Verfahren nach Anspruch 1 bis 5 angegeben.

Grundsätzlich ist die Ausbildung der beiden Vorrichtungen nach Art, Größe, räumlicher Zuordnung zueinander und Bewegungsablauf in weiten geeigneten Grenzen frei wählbar.

Eine besonders vorteilhafte Weiterbildung des erfindungsgemäßen Systems sieht vor, dass die beiden Vorrichtungen derart aufeinander abgestimmt ausgebildet sind, dass durch die erste Vorrichtung bei der Überführung in die Endposition in einer einzigen linearen Bewegung eines der Bauteile aus dem Magazin entnehmbar und der Tragschiene zuführbar ist. Hierdurch ist die erste Vorrichtung konstruktiv und schaltungstechnisch auf besonders einfache Weise realisierbar.

Grundsätzlich ist die Anordnung der Aufnahme an dem Rest der ersten Vorrichtung nach deren Art in weiten geeigneten Grenzen frei wählbar. Vorteilhafterweise ist die Aufnahme drehbar an dem Rest der ersten Vorrichtung angeordnet. Auf diese Weise ist es möglich, eine einfache Bewegung der ersten Vorrichtung in einen komplexeren Gesamtbewegungsablauf umzuwandeln.

Eine vorteilhafte Weiterbildung des Systems sieht vor, dass die erste Vorrichtung eine Kulissenführung und einen Kulissenstein aufweist, wobei jeweils eines der beiden Kulissenteile an dem beweglichen Teile und an dem unbeweglichen Teil der ersten Vorrichtung angeordnet ist. Hierdurch ist auf konstruktiv besonders einfache Weise eine Überführung der auf die Tragschiene aufgesteckten Bauteile von einer Zwischenlage in eine Endlage möglich.

Eine weitere vorteilhafte Weiterbildung sieht vor, dass die erste Vorrichtung einen Anlageabschnitt aufweist, an dem das Bauteil während der Montage auf der Tragschiene in Anlage ist. Auf diese Weise ist zum einen eine definierte Ausrichtung des Bauteils zu der ersten Vorrichtung und zum anderen ein Anschlag für ein Zusammenschieben der einzelnen Bauteile der Tragschiene auf konstruktiv einfache Weise realisiert.

Grundsätzlich ist die zweite Vorrichtung nach Art, Komplexität, Ausrichtung zur ersten Vorrichtung und Bewegungsablauf in weiten geeigneten Grenzen frei wählbar. Vorteilhafterweise weist die zweite Vorrichtung einen Antrieb auf, der die zweite Vorrichtung zwischen der ersten und der zweiten Montageposition lediglich linear bewegt. Hierdurch ist die zweite Vorrichtung konstruktiv und schaltungstechnisch einfach realisiert.

Eine andere vorteilhafte Weiterbildung sieht vor, dass die zweite Vorrichtung zumindest einen bolzen-oder hakenähnlichen Vorsprung zur Halterung der Tragschiene aufweist. Auf diese Weise ist die Halterung dazu korrespondierend ausgebildeter Tragschienen besonders einfach verwirklicht.

Grundsätzlich ist die räumliche Ausrichtung der beiden Vorrichtungen zueinander in weiten geeigneten Grenzen frei wählbar. Zweckmäßigerweise sind in der Benutzungslage des Systems die beiden Vorrichtungen räumlich derart zueinander angeordnet, dass die Bewegungsachsen, entlang derer die durch die beiden Vorrichtungen durchgeführten Bewegungen verlaufen, im Wesentlichen senkrecht zueinander stehen. Hierdurch sind besonders einfache Bewegungsgeometrien und damit Bewegungsabläufe bei beiden Vorrichtungen realisierbar.

Eine vorteilhafte Weiterbildung der vorgenannten Ausführungsform sieht vor, dass die Bewegungsachse der ersten Vorrichtung im Wesentlichen horizontal und die der zweiten Vorrichtung im Wesentlichen vertikal verläuft. Auf diese Weise ist ein einfacher und raumsparender Aufbau des Systems ermöglicht.

Eine besonders vorteilhafte Weiterbildung sieht vor, dass die zweite Vorrichtung an einem auf einer Traverse linear beweglichen Tragschiene gehalten ist. Hierdurch ist es möglich, dass die zweite Vorrichtung die daran gehaltene Tragschiene mehreren nebeneinander angeordneten Magazinen und dazu korrespondierenden ersten Vorrichtungen zuführen kann.

Anhand der beigefügten, grob schematischen Zeichnungen wird die Erfindung nachfolgend näher erläutert. Dabei zeigt:
- Fig. 1: ein erstes Ausführungsbeispiel des erfindungsgemäßen Systems in einer perspektivischen Ansicht der Benutzungslage,
- Fig. 2: das erste Ausführungsbeispiel in einer Detaildarstellung des in Fig. 1 kreisförmig umrandeten Bereichs,
- Fig. 3: das erste Ausführungsbeispiel in einer zur Fig. 2 gedrehten Darstellung,
- Fig. 4: eine Seitenansicht des Details aus Fig. 3 mit Blick auf die Kulissenführung,
- Fig. 5: ein zweites Ausführungsbeispiel des erfindungsgemäßen Systems in einer perspektivischen Ansicht in der Benutzungslage und
- Fig. 6: das zweite Ausführungsbeispiel in einer Detailansicht des in Fig. 5 rechteckig umrandeten Bereichs.

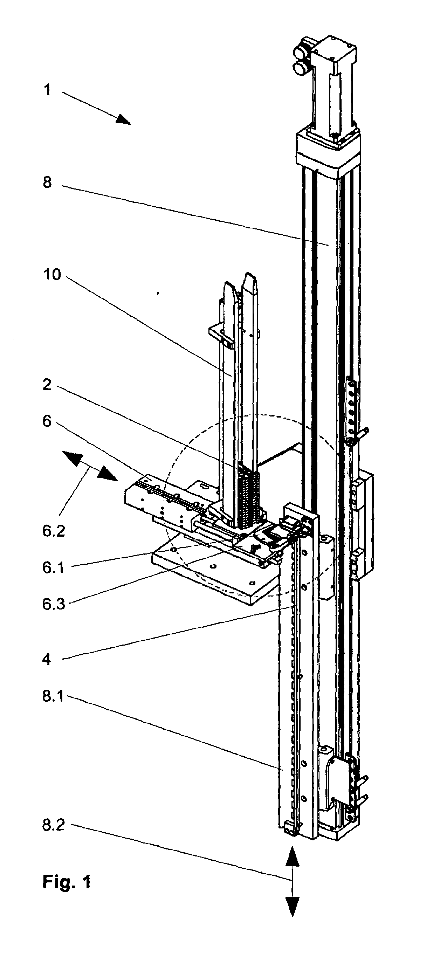

In Fig. 1 ist ein erstes Ausführungsbeispiel eines erfindungsgemäßen Systems 1 dargestellt.

Das erfindungsgemäße System 1 zur Montage von Bauteilen 2 auf einer Tragschiene 4 weist eine erste Vorrichtung 6, eine zweite Vorrichtung 8 sowie eine Magazin 10 auf.

Die erste Vorrichtung 6 ist hier als ein Lineartrieb, beispielsweise eine Servoachse, ausgebildet, der zwischen einer Ausgangsposition und einer Endposition automatisch hin und her bewegbar ist, wobei die erste Vorrichtung 6 bei der Überführung in die Endposition hier eine einzige lineare Bewegung durchführt. In der nicht dargestellten Ausgangsposition befindet sich die erste Vorrichtung 6 auf der der zweiten Vorrichtung 8 abgewandten Seite des Magazins 10.

In dem Magazin 10 sind Bauteile 2 gelagert. Bei denen Bauteilen 2 kann es sich um gleichartige oder verschiedenartige Bauteile 2 handeln.

Das unterste Bauteil 2 wird bei der Überführung der ersten Vorrichtung 6 von der Ausgangsposition in die Endposition in einer einzigen linearen Bewegung mittels einer an dem Rest der ersten Vorrichtung 6 drehbar angeordneten Aufnahme 6.1 aus dem Magazin 10 entnommen und der Tragschiene 4 zugeführt.

Hier ist die Tragschiene 4 an der zweiten Vorrichtung 8 lösbar gehalten. Die zweite Vorrichtung 8 ist hier ebenfalls als ein Lineartrieb, beispielsweise eine Servoachse, ausgebildet, der die zweite Vorrichtung 8 lediglich linear bewegt. An dem Rest der zweiten Vorrichtung 8 ist ein beweglicher Schlitten 8.1 angeordnet, an dem die Tragschiene 4 lösbar befestigt ist.

In dem vorliegenden Ausführungsbeispiel ist die erste Vorrichtung 6 im Wesentlichen horizontal und die zweite Vorrichtung 8 im Wesentlichen vertikal angeordnet, so dass die Bewegungsachsen, entlang derer die durch die beiden Vorrichtungen 6, 8 durchgeführten Bewegungen verlaufen, im Wesentlichen senkrecht zueinander stehen. Die Bewegungsachsen verlaufenen hier parallel zu den Längsachsen der beiden Vorrichtungen 6, 8 und sind in Fig. 1 durch Doppelpfeile 6.2 und 8.2 symbolisiert.

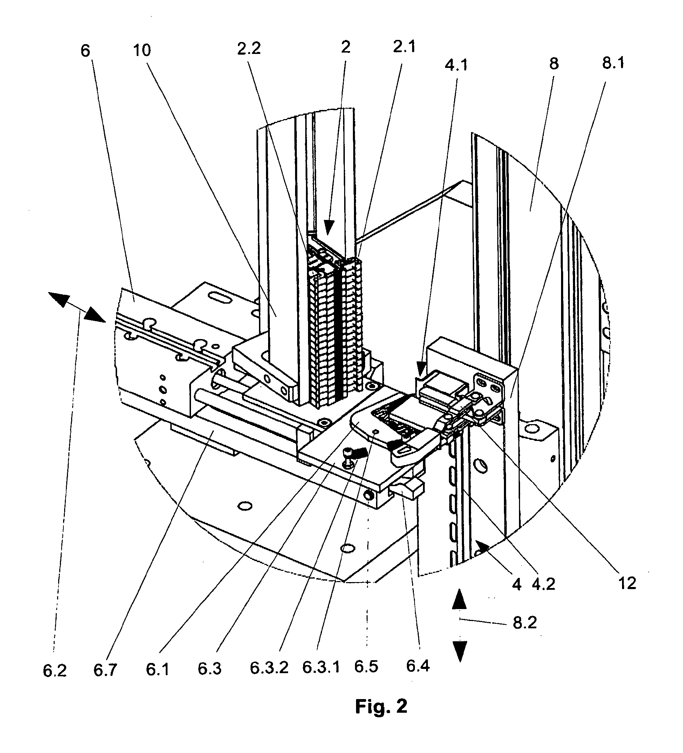

Fig. 2 zeigt den in Fig. 1 kreisförmig umrandeten Bereich in einer vergrößerten Darstellung. Wie daraus hervorgeht handelt es sich bei der Tragschiene 4 hier um eine so genannte Hutschiene, die mittels einer Klemmvorrichtung 12 an dem Schlitten 8.1 lösbar gehalten ist.

Da die Hutschiene 4 hier als Lochschiene ausgebildet ist, sieht eine hierzu alternative Befestigungsmöglichkeit vor, die als Lochschiene ausgebildete Tragschiene 4 mittels zumindest eines an dem Schlitten 8.1 angeordneten bolzen-oder hakenähnlichen Vorsprungs an der zweiten Vorrichtung 8 lösbar zu halten.

Wie aus Fig. 2 deutlich hervorgeht, befindet sich die erste Vorrichtung 6 in einer Zwischenlage zwischen der Ausgangsposition und der Endposition. Bei denen Bauteilen 2 handelt es sich hier um sogenannte Reihenklemmen, die auf dem Fachmann bekannte Weise auf die Hutschiene 4 aufgeclipst werden. Hierzu wird die in der Aufnahme 6.1 befindliche Reihenklemme 2, wie in Fig. 2 dargestellt, mit einem hakenähnlichen Vorsprung 2.1 mit dem einen vorspringenden Randbereich 4.1 der Hutschiene 4 in Eingriff gebracht, erster Bewegungsabschnitt, und durch die weitere Bewegung der ersten Vorrichtung 6 in Richtung Endposition, zweiter Bewegungsabschnitt, durch die Aufnahme 6.1 um das so gebildete Drehgelenk gedreht und mit einem anderen hakenähnlichen Vorsprung 6.2 über den anderen vorspringenden Randbereich 4.2 der Hutschiene 4 geclipst.

Während der Zufuhr des Bauteils 2 aus dem Magazin 10 zu der Hutschiene 4 und während der Montage des Bauteils 2 liegt das Bauteil 2 auf einem als Halteplatte ausgebildeten Anlageabschnitt 6.3 der ersten Vorrichtung 6 auf. Die Aufnahme 6.1 ist über einen Bolzen 6.3.1 an der Halteplatte 6.3 drehbar gelagert und in der in Fig. 2 dargestellten Lage mittels einer teilweise dargestellten Feder 6.3.2 vorgespannt.

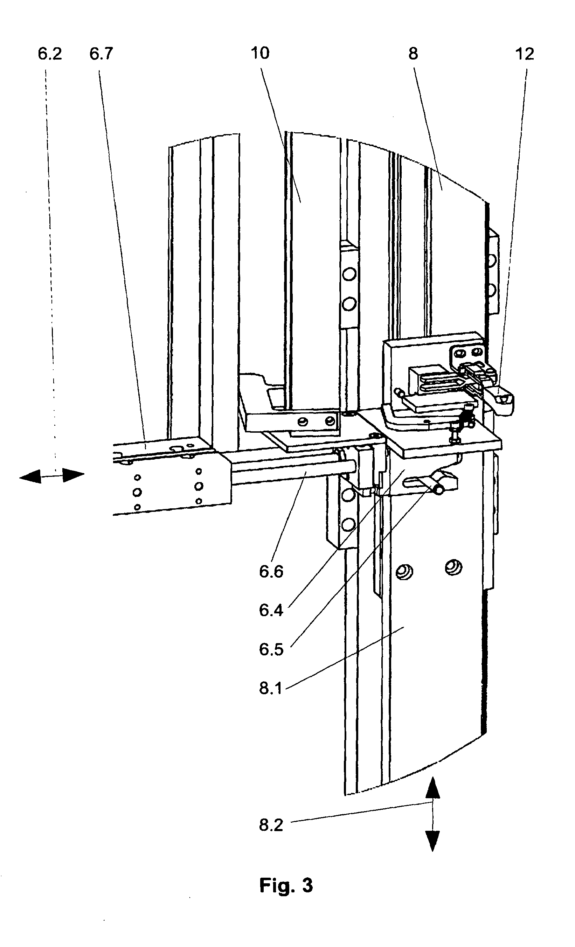

In Fig. 3 ist die als Hutschiene ausgebildete Tragschiene 4 zwecks der Übersichtlichkeit nicht dargestellt. Wie aus Fig. 3 hervorgeht, weist die erste Vorrichtung 6 eine Kulissenführung 6.4 und einen Kulissestein 6.5 auf, wobei hier die Kulissenführung 6.4 an dem beweglichen Teil 6.6 und der Kulissenstein 6.5 an dem unbeweglichen Teil 6.7 der ersten Vorrichtung 6 angeordnet ist. Aus Gründer der Übersichtlichkeit wurde die den Kulissenstein 6.5 haltende Traverse des unbeweglichen Teils 6.7 nicht dargestellt.

Im folgenden wird die Funktionsweise des erfindungsgemäßen Verfahrens anhand des ersten Ausführungsbeispiels erläutert.

Das Magazin 10 ist mit Bauteilen 2 bestückt und die erste Vorrichtung 6 befindet sich in der Ausgangsposition. An dem Schlitten 8.1 ist die als Hutschiene ausgebildete Tragschiene 4 mittels der Klemmvorrichtung 12 lösbar gehalten; der nicht näher dargestellte Antrieb der zweiten Vorrichtung 8 hat den Schlitten 8.1 mit der Tragschiene 4 längs der Bewegungsachse 8.2 in die in Fig. 1 dargestellte erste Montageposition überführt.

Der nicht näher dargestellte Antrieb der ersten Vorrichtung 6 überführt diese von der Ausgangsposition in die Endposition entlang der Bewegungsachse 6.2. Dabei entnimmt die erste Vorrichtung 6 mittels der Aufnahme 6.1 aus dem Magazin 10 das unterste Bauteil 2 und überführt dieses in einem ersten Bewegungsabschnitt in die in den Fig. 1 und 2 dargestellte Lage, in der das Bauteil 2 und die Tragschiene 4 in deren Randbereichen zueinander in Anlage sind.

In einem zweiten Bewegungsabschnitt der einzigen linearen Bewegung der ersten Vorrichtung 6 bei der Überführung in die Endposition wird das Bauteil 2 um das so gebildete Drehgelenk in eine Zwischenlage relativ zu der Tragschiene 4 überführt, wobei das Bauteil 2 auf dem Fachmann bekannte Weise mit der Tragschiene 4 verrastet.

Bei der vorgenannten einzigen linearen Bewegung der ersten Vorrichtung 6 gelangt die Kulissenführung 6.4 des beweglichen Teils 6.6 in Eingriff mit dem Kulissenstein 6.5 des unbeweglichen Teils 6.7 der ersten Vorrichtung 6. Hierdurch wird das Bauteil 2 in dessen Endlage überführt; in dem vorliegenden Ausführungsbeispiel in der Blattebene von Fig. 3 nach oben. Auf diese Weise ist gewährleistet, dass das Bauteil 2 in ausreichendem Abstand zu bereits auf der Tragschiene 4 aufgesteckten Bauteilen 2 montiert wird, um so Kollisionen zwischen den letztgenannten Bauteilen 2 und dem aktuell zu montierenden Bauteil 2 zu verhindern. Beispielsweise kann es aufgrund von Toleranzen der Bauteile 2 und/oder der Tragschiene 4 vorkommen, dass bereits auf die Tragschiene 4 aufgesteckte Bauteile 2 durch die Gravitationskraft geringfügig in der Blattebene von Fig. 1 nach unten hängen.

Sobald das Bauteil 2 auf die Tragschiene 4 vollständig aufgesteckt ist, befindet sich die erste Vorrichtung 6 in der Endposition. Vor deren Rücküberführung in die Ausgangsposition verbleibt die erste Vorrichtung 6 für eine vorher festgelegte Wartezeit in der Endposition, während die zweite Vorrichtung 8 die bereits auf der Tragschiene 4 aufgesteckten Bauteile 2 mit einer vorher festgelegten Kraft gegen den Anlageabschnitt 6.3 der ersten Vorrichtung 6 presst. Hierdurch ist gewährleistet, dass die in dem vollständig bestückten Zustand der Tragschiene 4 in deren Längsrichtung nebeneinander angeordneten Bauteile 2 lückenlos aneinander anliegen.

Zeitlich danach überführt die zweite Vorrichtung 8 die Tragschiene 4 in die nicht dargestellte zweite Montageposition und der Zyklus für die Montage eines Bauteiles 2 ist beendet. Auf diese Weise kann während eines nächsten Zyklus eines im vollständig bestückten Zustand der Tragschiene 4 in deren Längsrichtung neben diesem Bauteil 2 angeordnetes weiteres Bauteil 2 in einer zu dem Bauteil 2 analogen Weise auf die in der zweiten Montageposition gehaltene Tragschiene 4 aufgesteckt werden.

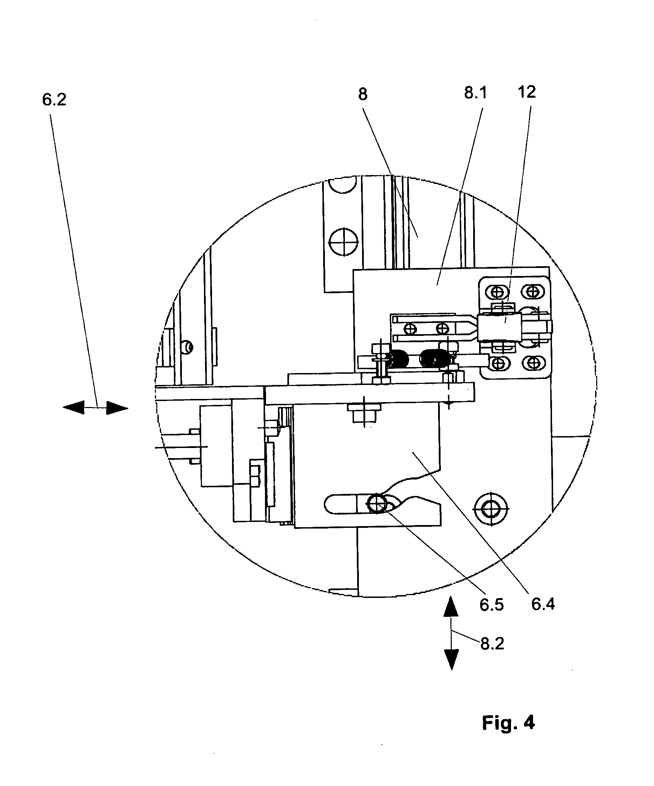

Fig. 4 zeigt das Detail gemäß Fig. 3 in einer Seitenansicht.

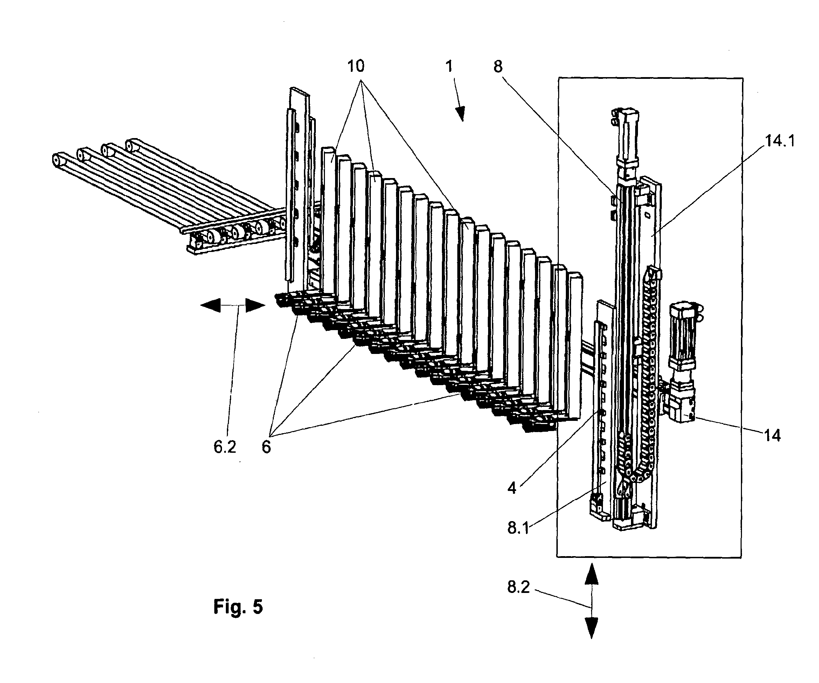

In Fig. 5 ist ein zweites Ausführungsbeispiel eines erfindungsgemäßen Systems dargestellt. Im Unterschied zu dem ersten Ausführungsbeispiel weist das zweite Ausführungsbeispiel hierfür 17 voneinander verschiedene und nebeneinander angeordnete Magazine 10 auf, in denen jeweils voneinander verschiedene Bauteile 2 gelagert sind. Jedem Magazin 10 ist in analoger Weise zu dem ersten Ausführungsbeispiel eine Vorrichtung 6 zugeordnet, deren Funktionsweise mit der aus dem ersten Ausführungsbeispiel identisch ist. Die zweite Vorrichtung 8 ist hier im Unterschied zu dem ersten Ausführungsbeispiel auf einer Traverse 14 beweglich gehalten. Hierfür ist die zweite Vorrichtung 8 auf einem entlang der Traverse 14 beweglichen Tragschlitten 14.1 befestigt. Der Tragschlitten 14.1 ist entlang der Traverse 14 automatisch hin und her bewegbar, so dass die zweite Vorrichtung 8 dieses Ausführungsbeispiels in analoger Weise zu dem ersten Ausführungsbeispiel relativ zu jeder der ersten Vorrichtungen 6 positioniert werden kann. Der Antrieb der Traverse 14 bzw. des Tragschlittens 14.1 kann beispielsweise ebenfalls als Servoachse ausgebildet sein.

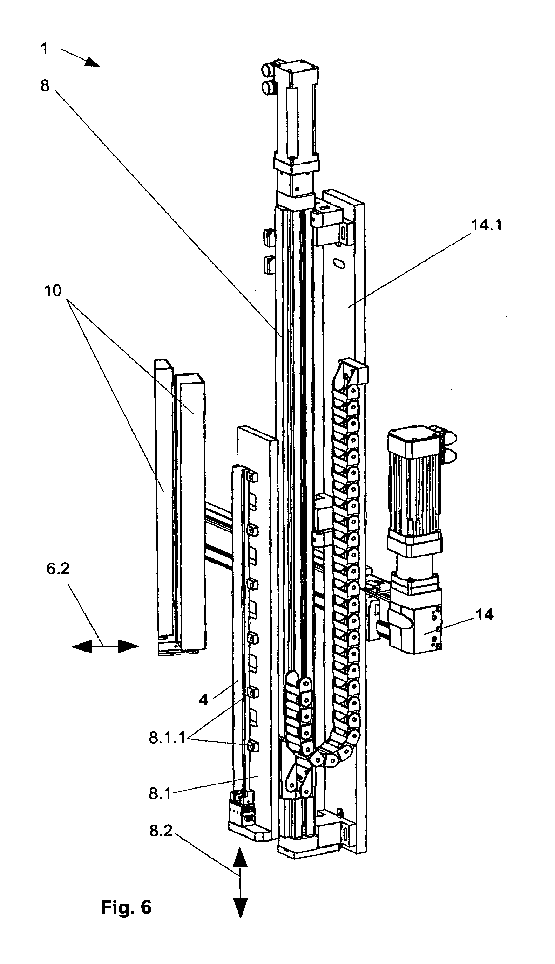

Im Übrigen entspricht die Funktionsweise dem des ersten Ausführungsbeispiels. Fig. 6 zeigt den rechteckig umrandeten Bereich aus Fig. 5 in einer vergrößerten Darstellung. Wie aus Fig. 6 deutlich hervorgeht, ist die als Lochschiene ausgebildete Tragschiene 4 hier über hakenähnliche Vorsprünge 8.1.1 des Schlittens 8.1 an der zweiten Vorrichtung 8 lösbar gehalten.

Die Erfindung ist nicht auf die vorgenannten Ausführungsbeispiele beschränkt. Die erste und die zweite Vorrichtung sind in weiten geeigneten Grenzen frei wählbar. Beispielsweise können die Vorrichtungen andere Antriebsarten aufweisen, so dass prinzipiell auch andere Bewegungsbahnen und damit Bewegungsabläufe möglich sind. Insbesondere kann die zweite Vorrichtung als ein Roboter ausgebildet sein. Der Roboter kann dabei ebenfalls die Funktion der Traverse aus dem ersten Ausführungsbeispiel erfüllen. Auch die Anzahl der Magazine ist nicht auf die oben genannten Anzahlen beschränkt. Bei den Bauteilen kann es sich um jede Art von elektrischer Klemme oder anderweitigen elektrischen oder nicht elektrischen Bauteilen handeln. Gleiches gilt für die Tragschiene, die ebenfalls nicht auf die Geometrie einer Hutschiene beziehungsweise einer Lochschiene beschränkt ist. Auch ist es möglich, die beiden Vorrichtungen räumlich anders zueinander auszurichten.

### Bezugszeichenliste

- 1: System
- 2: Bauteil
- 2.1: Hakenähnlicher Vorsprung
- 2.2: Hakenähnlicher Vorsprung
- 4: Tragschiene
- 4.1: Vorspringender Randbereich
- 4.2: Vorspringender Randbereich
- 6: Erste Vorrichtung
- 6.1: Aufnahme
- 6.2: Bewegungsachse der ersten Vorrichtung
- 6.3: Anlageabschnitt
- 6.3.1: Bolzen
- 6.3.2: Feder
- 6.4: Kulissenführung
- 6.5: Kulissenstein
- 6.6: Bewegliches Teil
- 6.7: Unbewegliches Teil
- 8: Zweite Vorrichtung
- 8.1: Schlitten
- 8.1.1: Hakenähnliche Vorsprünge
- 8.2: Bewegungsachse der zweiten Vorrichtung
- 10: Magazin
- 12: Klemmvorrichtung
- 14: Traverse
- 14.1: Tragschlitten

## Patentansprüche

1. Verfahren zur Montage von Bauteilen (2), insbesondere Reihenklemmen, auf einer Tragschiene (4), wobei die Bauteile (2) mittels einer ersten Vorrichtung (6), die eine Aufnahme (6.1) für die Bauteile (2) umfasst und sich zwischen einer Ausgangsposition und einer Endposition automatisch hin und her bewegt, aus zumindest einem Magazin (10) entnommen und auf die durch eine zweite Vorrichtung (8) in einer ersten Montageposition gehaltene Tragschiene (4) aufgesteckt werden,
**dadurch gekennzeichnet,**
**dass** die zweite Vorrichtung (8) die Tragschiene (4) nach dem Aufstecken eines der Bauteile (2) automatisch in eine zweite Montageposition überführt und ein im vollständig bestückten Zustand der Tragschiene (4) in deren Längsrichtung neben diesem Bauteil (2) angeordnetes weiteres Bauteil (2) in einer zu dem Bauteil (2) analogen Weise auf die in der zweiten Montageposition gehaltene Tragschiene (4) aufgesteckt wird.

2. Verfahren nach Anspruch 1,
**dadurch gekennzeichnet,**
**dass** die zweite Vorrichtung (8) die Tragschiene (4) in den Montagepositionen relativ zu der ersten Vorrichtung (6) derart positioniert, dass die erste Vorrichtung (6), bei der Überführung von der Ausgangs- in die Endposition durch eine einzige lineare Bewegung eines der Bauteile (2) aus dem Magazin (10) entnimmt und der Tragschiene (4) zuführt.

3. Verfahren nach Anspruch 2,
**dadurch gekennzeichnet,**
**dass** die einzige lineare Bewegung der ersten Vorrichtung (6) in einem ersten Bewegungsabschnitt das Bauteil (2) mit der Tragschiene (4) in deren Randbereichen zueinander in Anlage bringt, und in einem zweiten Bewegungsabschnitt das Bauteil (2) um das so gebildete Drehgelenk in eine Endlage relativ zu der Tragschiene (4) dreht.

4. Verfahren nach Anspruch 3,
**dadurch gekennzeichnet,**
**dass** die einzige lineare Bewegung der ersten Vorrichtung (6) während des zweiten Bewegungsabschnitts das Bauteil (2) zunächst in eine Zwischenlage und zeitlich danach in die Endlage überführt.

5. Verfahren nach einem der Ansprüche 3 oder 4,
**dadurch gekennzeichnet,**
**dass** die erste Vorrichtung (6) am Ende der einzigen linearen Bewegung und vor deren Rücküberführung in die Ausgangsposition für eine vorher festgelegte Wartezeit in der Endposition verbleibt und die zweite Vorrichtung (8) während der Wartezeit die auf der Tragschiene (4) bereits aufgesteckten Bauteile mit einer vorher festgelegten Kraft gegen die erste Vorrichtung (6) presst.

6. System (1) zur Montage von Bauteilen (2) auf einer Tragschiene (4) gemäß einem der Verfahren nach Anspruch 1 bis 5, mit einer ersten Vorrichtung (6), die eine Aufnahme (6.1) für die Bauteile (2) aufweist, wobei die erste Vorrichtung (6) zwischen einer Ausgangsposition und einer Endposition automatisch hin und her bewegbar ist, zumindest einem Magazin (10), in dem die Bauteile (2) lagerbar sind, und einer zweiten Vorrichtung (8), durch die die Tragschiene (4) in einer ersten Montageposition halterbar ist,
**dadurch gekennzeichnet,**
**dass** die Tragschiene (4) nach dem Aufstecken eines der Bauteile (2) auf die Tragschiene (4) durch die zweite Vorrichtung (8) automatisch in eine zweite Montageposition überführbar ist und die Tragschiene (4) in der zweiten Montageposition derart zu der ersten Vorrichtung (6) ausgerichtet ist, dass ein im vollständig bestückten Zustand der Tragschiene (4) in deren Längsrichtung neben diesem Bauteil (2) angeordnetes weiteres Bauteil (2) in einer zu dem Bauteil (2) analogen Weise auf die in der zweiten Montageposition gehaltene Tragschiene (4) aufsteckbar ist.

7. System (1) nach Anspruch 6,
**dadurch gekennzeichnet,**
**dass** die beiden Vorrichtungen (6, 8) derart aufeinander abgestimmt ausgebildet sind, dass durch die erste Vorrichtung (6) bei der Überführung in die Endposition in einer einzigen linearen Bewegung eines der Bauteile (2) aus dem Magazin (10) entnehmbar und der Tragschiene (4) zuführbar ist.

8. System (1) nach Anspruch 6 oder 7,
**dadurch gekennzeichnet,**
**dass** die Aufnahme (6.1) drehbar an dem Rest der ersten Vorrichtung (6) angeordnet ist.

9. System (1) nach einem der Ansprüche 6 bis 8,
**dadurch gekennzeichnet,**
**dass** die erste Vorrichtung (6) eine Kulissenführung (6.4) und einen Kulissenstein (6.5) aufweist, wobei jeweils eines der beiden Kulissenteile (6.4, 6.5) an dem beweglichen Teil (6.6) und an dem unbeweglichen Teil (6.7) der ersten Vorrichtung (6) angeordnet ist.

10. System (1) nach einem der Ansprüche 6 bis 9,
**dadurch gekennzeichnet,**
**dass** die erste Vorrichtung (6) einen Anlageabschnitt (6.3) aufweist, an dem das Bauteil (2) während der Montage auf der Tragschiene (4) in Anlage ist.

11. System (1) nach einem der Ansprüche 6 bis 10,
**dadurch gekennzeichnet,**
**dass** die zweite Vorrichtung (8) einen Antrieb aufweist, der die zweite Vorrichtung (8) zwischen der ersten und der zweiten Montageposition lediglich linear bewegt.

12. System (1) nach einem der Ansprüche 6 bis 11,
**dadurch gekennzeichnet,**
**dass** die zweite Vorrichtung (8) zumindest einen bolzen- oder hakenähnlichen Vorsprung (8.1.1) zur Halterung der Tragschiene (4) aufweist.

13. System (1) nach einem der Ansprüche 6 bis 12,
**dadurch gekennzeichnet,**
**dass** in der Benutzungslage die beiden Vorrichtungen (6, 8) räumlich derart zueinander angeordnet sind, dass die Bewegungsachsen (6.2, 8.2), entlang der die durch die beiden Vorrichtungen (6, 8) durchgeführten Bewegungen verlaufen, im Wesentlichen senkrecht zueinander stehen.

14. System (1) nach Anspruch 13,
**dadurch gekennzeichnet,**
**dass** die Bewegungsachse (6.2) der ersten Vorrichtung (6) im Wesentlichen horizontal und die der zweiten Vorrichtung (8) im Wesentlichen vertikal verläuft.

15. System (1) nach einem der Ansprüche 6 bis 14,
**dadurch gekennzeichnet,**
**dass** die zweite Vorrichtung (8) an einem auf einer Traverse (14) linear beweglichen Tragschlitten (14.1) gehalten ist.

## Claims

1. A method for assembling components (2), in particular serial terminals, onto a support rail (4), wherein the components (2) are removed from at least one cartridge (10) by means of a first device (6) that encompasses a receptacle (6.1) for the components (2) and automatically moves back and forth between an initial position and end position, and plugged onto a support rail (4) held in a first assembly position by a second device (8),
**characterized in that**
the second device (8) automatically moves the support rail (4) into a second assembly position after one of the components (2) has been plugged on, and another component (2) situated next to this component (2) in the completely assembled state of the support rail (4) in its longitudinal direction is plugged onto the support rail (4) held in the second assembly position in a manner analogous to the component (2).

2. The method according to claim 1,
**characterized in that**
the second device (8) positions the support rail (4) in the assembly positions relative to the first device (6) in such a way that the first device (6), while being moved from the initial to end position, removes one of the components (2) from the cartridge (10) and feeds it to the support rail (4) in a single linear motion.

3. The method according to claim 2,
**characterized in that**
the single linear motion of the first device (6) causes the component (2) to abut against the support rail (4) in its edge areas in a first incremental motion, and turns the component (2) around the pivot formed in this way into an end position relative to the support rail (4) in a second incremental motion.

4. The method according to claim 3,
**characterized in that**
the single linear motion of the first device (6) initially moves the component (2) into an interim position and some time thereafter into the end position during the second incremental motion.

5. The method according to one of claims 3 or 4,
**characterized in that**
the first device (6) remains in the end position for a predetermined waiting period after the single linear motion and before returning to the initial position, and the second device (8) presses the components already plugged onto the support rail (4) against the first device (6) with a predetermined force during the waiting period.

6. A system (1) for assembling components (2) onto a support rail (4) based upon one of the methods according to claims 1 to 5, with a first device (6) that exhibits a receptacle (6.1) for the components (2), wherein the first device (6) can be automatically moved back and forth between an initial position and end position, at least one cartridge (10) in which the components (2) can be mounted, and a second device (8) with which the support rail (4) can be held in a first assembly position,
**characterized in that**
the support rail (4) can be automatically moved into a second assembly position by means of the second device (8) after one of the components (2) has been plugged onto the support rail (4), and the support rail (4) in the second assembly position is aligned in such a way relative to the first device (6) that another component (2) situated next to this component (2) in the completely assembled state of the support rail (4) in its longitudinal direction can be plugged onto the support rail (4) held in the second assembly position in a manner analogous to the component (2).

7. The system (1) according to claim 6, **characterized in that**
the two devices (6, 8) are adjusted to each other in such a way that, while moving to the end position, the first device (6) can remove one of the components (2) from the cartridge (10) and feed it to the support rail (4) in a single linear motion.

8. The system (1) according to claim 6 or 7,
**characterized in that**
the receptacle (6.1) is rotatably arranged on the remainder of the first device (6).

9. The system (1) according to one of claims 6 to 8,
**characterized in that**
the first device (6) exhibits a sliding gate guide (6.4) and a sliding gate (6.5), wherein a respective one of the two gate parts (6.4, 6.5) is arranged on the movable part (6.6) and on the unmovable part (6.7) of the first device (6).

10. The system (1) according to one of claims 6 to 9,
**characterized in that**
the first device (6) exhibits an abutment section (6.3), against which the component (2) abuts during assembly onto the support rail (4).

11. The system (1) according to one of claims 6 to 10,
**characterized in that**
the second device (8) exhibits a drive that moves the second device (8) only linearly between the first and second assembly position.

12. The system (1) according to one of claims 6 to 11,
**characterized in that**
the second device (8) exhibits at least one bolt or hook-like projection (8.1.1) for retaining the support rail (4).

13. The system (1) according to one of claims 6 to 12,
**characterized in that**
the two devices (6, 8) are spatially arranged relative to each other in the use position in such a way that the movement axes (6.2, 8.2) along which the motions performed by the two devices (6, 8) run are essentially perpendicular to each other.

14. The system (1) according to claim 13,
**characterized in that**
the movement axis (6.2) of the first device (6) runs essentially horizontally, and that of the second device (8) runs essentially vertically.

15. The system (1) according to one of claims 6 to 14,
**characterized in that**
the second device (8) is held on a carriage (14.1) that can move linearly on a cross-arm (14).

## Revendications

1. Procédé pour le montage de composants (2), en particulier de blocs de jonction, sur un rail support (4), les composants (2) étant prélevés d'au moins un magasin (10) à l'aide d'un premier dispositif (6) qui comprend un réceptacle (6.1) pour les composants (2) et qui se déplace automatiquement entre une position de départ et une position finale, et étant placés sur le rail support (4) maintenu dans une première position de montage grâce à un deuxième dispositif (8),
**caractérisé en ce que**,
après la mise en place de l'un des composants (2), le deuxième dispositif (8) fait automatiquement passer le rail support (4) dans une deuxième position de montage et un autre composant (2), disposé à côté de ce composant (2) dans le sens longitudinal du rail support (4) à l'état entièrement équipé de celui-ci, étant placé d'une manière analogue à celle du composant (2) sur le rail support (4) maintenu dans la deuxième position de montage.

2. Procédé selon la revendication 1,
**caractérisé en ce que**
le deuxième dispositif (8) positionne le rail support (4) dans les positions de montage par rapport au premier dispositif (6) de manière à ce que le premier dispositif (6), lors du passage de la position de départ à la position finale grâce à un seul déplacement linéaire, prélève l'un des composants (2) du magasin (10) et l'amène au rail support (4).

3. Procédé selon la revendication 2,
**caractérisé en ce que**
l'unique déplacement linéaire du premier dispositif (6), dans une première partie de déplacement, amène le composant (2) en contact avec le rail support (4) au niveau de leurs zones de bord, et dans une deuxième partie de déplacement, fait tourner le composant (2) autour de l'articulation tournante ainsi formée dans une position finale par rapport au rail support (4).

4. Procédé selon la revendication 3,
**caractérisé en ce que**
l'unique déplacement linéaire du premier dispositif (6), pendant la deuxième partie de déplacement, fait tout d'abord passer le composant (2) dans une position intermédiaire et plus tard dans le temps, dans la position finale.

5. Procédé selon l'une des revendications 3 ou 4,
**caractérisé en ce que**
le premier dispositif (6), à la fin de l'unique déplacement linéaire et avant de refaire passer celui-ci dans la position de départ, reste dans la position finale pendant un temps d'attente prédéfini à l'avance et **en ce que**, pendant le temps d'attente, le deuxième dispositif (8) presse les composants déjà placés sur le rail support (4) contre le premier dispositif (6) avec une force prédéfinie à l'avance.

6. Système (1) pour le montage de composants (2) sur un rail support (4) conformément à l'un des procédés selon les revendications 1 à 5, avec un premier dispositif (6), lequel présente un réceptacle (6.1) pour les composants (2), le premier dispositif (6) pouvant être automatiquement déplacé dans le sens aller et retour entre une position de départ et une position finale, au moins un magasin (10) dans lequel les composants (2) peuvent être stockés, et un deuxième dispositif (8) grâce auquel il est possible de maintenir le rail support (4) dans une première position de montage,
**caractérisé en ce que**,
après la mise en place de l'un des composants (2) sur le rail support (4), on peut faire automatiquement passer le rail support (4) dans une deuxième position de montage grâce au deuxième dispositif (8), et dans la deuxième position de montage, le rail support (4) étant orienté d'une manière telle par rapport au premier dispositif (6), qu'un deuxième composant (2), disposé à côté de ce composant (2) dans le sens longitudinal du rail support (4) à l'état entièrement équipé de celui-ci, peut être placé d'une manière analogue à celle du composant (2) sur le rail support (4) maintenu dans la deuxième position de montage.

7. Système (1) selon la revendication 6,
**caractérisé en ce que**
les deux dispositifs (6, 8) sont réalisés de manière adaptée l'un par rapport à l'autre d'une manière telle, que grâce au premier dispositif (6), lors du passage à la position finale en un seul déplacement linéaire, on peut prélever l'un des composants (2) du magasin (10) et l'amener au rail support (4).

8. Système (1) selon la revendication 6 ou 7,
**caractérisé en ce que**
le réceptacle (6.1) est disposé de manière à pouvoir tourner sur le reste du premier dispositif (6).

9. Système (1) selon l'une des revendications 6 à 8,
**caractérisé en ce que**
le premier dispositif (6) présente un guide de coulisse (6.4) et un coulisseau (6.5),
respectivement l'un des deux éléments de coulisse (6.4, 6.5) étant disposé sur la partie mobile (6.6) et sur la partie immobile (6.7) du premier dispositif (6).

10. Système (1) selon l'une des revendications 6 à 9,
**caractérisé en ce que**
le premier dispositif (6) présente un segment de butée (6.3) contre lequel repose le composant (2) pendant le montage sur le rail support (4).

11. Système (1) selon l'une des revendications 6 à 10,
**caractérisé en ce que**
le deuxième dispositif (8) présente un organe d'entraînement qui déplace le deuxième dispositif (8) entre la première et la deuxième position de montage simplement de manière linéaire.

12. Système (1) selon l'une des revendications 6 à 11,
**caractérisé en ce que**
le deuxième dispositif (8) présente au moins une saillie (8.1.1) semblable à une goupille ou un crochet pour la fixation du rail support (4).

13. Système (1) selon l'une des revendications 6 à 12,
**caractérisé en ce que**,
dans la position d'utilisation, les deux dispositifs (6, 8) sont disposés l'un par rapport à l'autre dans l'espace d'une manière telle, que les axes de déplacement (6.2, 8.2) le long desquels les déplacements sont effectués grâce aux deux dispositifs (6, 8), sont sensiblement perpendiculaires l'un par rapport à l'autre.

14. Système (1) selon la revendication 13,
**caractérisé en ce que**
l'axe de déplacement (6.2) du premier dispositif (6) s'effectue sensiblement de manière horizontale, et celui du deuxième dispositif (8),
de manière sensiblement verticale.

15. Système (1) selon l'une des revendications 6 à 14,
**caractérisé en ce que**
le deuxième dispositif (8) est supporté sur un chariot de support (14.1) mobile linéairement sur une traverse (14).
